# EUROPÄISCHE PATENTSCHRIFT

(11) **EP 4 181 391 B1**
(45) Veröffentlichungstag und Bekanntmachung des Hinweises auf die Patenterteilung: **25.02.2026**
(21) Anmeldenummer: 22201044.9
(22) Anmeldetag: 12.10.2022
(51) Int. Cl.: H02P 29/64, A47L 15/00, A47L 15/42, D06F 34/20, H02P 29/032, D06F 39/08, D06F 103/00, D06F 103/46, D06F 103/48, D06F 105/00, D06F 105/46, D06F 105/48

(54) **HAUSHALTSGERÄT MIT EINER STEUERUNG**
DOMESTIC APPLIANCE WITH A CONTROL SYSTEM
APPAREIL MÉNAGER AVEC UNE COMMANDE

(30) Priorität: 10.11.2021 DE 102021212637
(43) Veröffentlichungstag der Anmeldung: 17.05.2023
(73) Patentinhaber: BSH Hausgeräte GmbH, 81739 München (DE)
(72) Erfinder: Otto, Andre, 13357 Berlin (DE); Walter, Axel, 14621 Schönwalde-Glien (DE); Beyer, Björn, 13591 Berlin (DE)

(56) Entgegenhaltungen:
- EP-B1- 2 725 331
- CN-A- 104 250 905
- CN-A- 106 283 475
- CN-A- 108 130 681
- DE-A1- 102010 042 487
- DE-A1- 102011 007 170
- JP-A- 2018 126 337

## Beschreibung

Die vorliegende Erfindung betrifft ein Haushaltsgerät mit einer Steuerung.

In herkömmlichen Haushaltsgeräten, insbesondere Wäschepflegegeräten, ist entscheidend, die Betriebstemperatur von in Antrieben der Haushaltsgeräte, insbesondere Wäschepflegegeräte, verwendeten Elektromotoren, zu überwachen, um zu verhindern, dass die entsprechenden Betriebstemperaturen derart ansteigen, dass die entsprechenden Elektromotoren beschädigt werden könnten.

Die Offenlegungsschrift DE 10 2011 007 170 A1 offenbart ein Verfahren zum Erkennen und Anzeigen eines Hygienegrades von Wäsche.

Die Patentschrift EP 2 725 331 B1 offenbart ein Verfahren zum Bestimmen einer Betriebstemperatur eines Elektromotors.

Die Offenlegungsschrift JP 2018 2018 126337 A offenbart eine Waschmaschine.

Es ist die Aufgabe der vorliegenden Erfindung, ein Haushaltsgerät, insbesondere Wäschepflegegerät, mit einem Antrieb bereitzustellen, bei welchem eine wirksame Temperaturüberwachung sichergestellt werden kann.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Gemäß einem ersten Aspekt wird die erfindungsgemäße Aufgabe durch ein Haushaltsgerät gelöst, mit einem Antrieb zum Antreiben eines beweglichen Elements des Haushaltsgeräts, wobei der Antrieb einen Elektromotor umfasst, welcher ausgebildet ist, das bewegliche Element zu bewegen, einem Temperatursensor zum Erfassen einer Temperatur, und einer Steuerung, welche steuerungstechnisch mit dem Antrieb und dem Temperatursensor verbunden ist, wobei die Steuerung ausgebildet ist, bei einer durch den Temperatursensor erfassten Referenztemperatur einen elektrischen Referenzwiderstand des Elektromotors in Abhängigkeit von einer an dem Elektromotor anliegenden elektrischen Referenzspannung und elektrischen Referenzstromstärke zu bestimmen, und wobei die Steuerung ausgebildet ist, während des Betriebs des Antriebs die Betriebstemperatur des Elektromotors in Abhängigkeit von einer an dem Elektromotor anliegenden elektrischen Betriebsspannung und elektrischen Betriebsstromstärke, sowie in Abhängigkeit des bestimmten Referenzwiderstands und der Referenztemperatur zu bestimmen.

Dadurch wird der technische Vorteil erreicht, dass durch die Bestimmung des elektrischen Referenzwiderstands des Elektromotors, sowie der während des Betriebs des Wäschepflegegeräts andem Elektromotor anliegenden elektrischen Betriebsspannung und elektrischen Betriebsstromstärke eine besonders vorteilhafte Bestimmung der Betriebstemperatur des Elektromotors erreicht wird.

Das Prinzip der Bestimmung der Betriebstemperatur durch die Messung von elektrischen Stromparametern an dem Elektromotor beruht auf einer Abhängigkeit zwischender Temperatur des Elektromotors und dem elektrischen Widerstand des Elektromotors. Somit besteht eine Abhängigkeit zwischen dem bei der Referenztemperatur an dem Elektromotor anliegenden elektrischen Referenzwiderstand, und dem während des Betriebs an dem Elektromotor anliegenden elektrischen Betriebswiderstand des Elektromotors bei der entsprechenden Betriebstemperatur.

Hierbei kann der elektrische Referenzwiderstand des Elektromotors als auch der elektrische Betriebswiderstand des Elektromotors gemäß dem Ohm'schen Gesetz in Abhängigkeit von der entsprechenden elektrischen Referenzspannung, bzw. elektrischen Referenzstromstärke als auch in Abhängigkeit von der entsprechenden elektrischen Betriebsspannung, bzw. der elektrischen Betriebsstromstärke durch die Steuerung bestimmt werden.

Insbesondere ist die Steuerung ausgebildet während des Betriebs des Antriebs einen elektrischen Betriebswiderstand des Elektromotors in Abhängigkeit von einer an dem Elektromotor anliegenden elektrischen Betriebsspannung und elektrischen Betriebsstromstärke zu bestimmen, und ist die Steuerung ausgebildet während des Betriebs des Antriebs die Betriebstemperatur des Elektromotors in Abhängigkeit des bestimmten Referenzwiderstands und der Referenztemperatur zu bestimmen.

Verfügt die Steuerung ferner über die Referenztemperatur zum Zeitpunkt der Messung des elektrischen Referenzwiderstands, kann die Steuerung in Abhängigkeit von der Betriebsspannung, der elektrischen Betriebsstromstärke, des elektrischen Referenzwiderstands und der Referenztemperatur, die Betriebstemperatur bestimmen.

Dadurch kann eine besonders genaue Temperaturmessung des Elektromotors durch die entsprechenden elektrischen Stromparameter sichergestellt werden, ohne dass während des Betriebs des Elektromotors eine direkte Temperaturmessung mittels eines Temperatursensors durchgeführt werden muss. Eine entsprechende besonders genaue Temperaturschätzung des Elektromotors verhindert hierbei eine vorzeitige Abschaltung des Antriebs, so dass der gesamte Temperaturbereich vorteilhaft zur Verfügung steht.

Insbesondere ist die Steuerung ausgebildet, bei der durch den Temperatursensor erfassten Referenztemperatur eine Mehrzahl von elektrischen Messwiderständen des Elektromotors jeweils in Abhängigkeit von einer an dem Elektromotor anliegenden elektrischen Referenzspannung und elektrischen Referenzstromstärke zu bestimmen, und ist die Steuerung ausgebildet, den elektrischen Referenzwiderstand als einen Mittelwert der Mehrzahl von elektrischen Messwiderständen zu bestimmen.

Dadurch wird der technische Vorteil erreicht, dass durch eine entsprechende vorteilhafte Mittelung von mehreren Messungen die Genauigkeit der Bestimmung des elektrischen Referenzwiderstands verbessert werden kann.

Unter einem Haushaltsgerät wird ein Gerät verstanden, das zur Haushaltsführung eingesetzt wird. Das kann ein Haushaltsgroßgerät sein, wie beispielsweise eine Waschmaschine, ein Wäschetrockner, eine Geschirrspülmaschine. Das kann aber auch ein Haushaltskleingerät sein, wie beispielsweise ein Warmwasserbereiter, ein Kaffeevollautomat, eine Küchenmaschine oder ein Teppichreinigungsgerät.

Insbesondere umfasst das Haushaltsgerät ein Wäschepflegegerät, wie z.B. eine Waschmaschine oder einen Wäschetrockner.

In einer vorteilhaften Ausführungsform ist die Steuerung ausgebildet, den elektrischen Referenzwiderstand des Elektromotors auf Basis der folgenden Formel zu bestimmen, R_{ref} = U_{ref}/I_{ref}, wobei R_{ref} dem elektrischen Referenzwiderstand des Elektromotors bei der durch den Temperatursensor erfassten Referenztemperatur entspricht, wobei U_{ref} der elektrischen Referenzspannung des Elektromotors bei der durch den Temperatursensor erfassten Referenztemperatur entspricht, und wobei I_{ref} der erfassten elektrischen Referenzstromstärke des Elektromotors bei der durch den Temperatursensor erfassten Referenztemperatur entspricht.

Dadurch wird der technische Vorteil erreicht, dass bei der durch den Temperatursensor erfassten Referenztemperatur mittels des Ohm'schen Gesetzes durch die Steuerung auf eine einfache Weise aus der elektrischen Referenzspannung und der elektrischen Referenzstromstärke des Elektromotors der elektrische Referenzwiderstand des Elektromotors ermittelt werden kann.

In einer vorteilhaften Ausführungsform ist die Steuerung ausgebildet, einen elektrischen Betriebswiderstand des Elektromotors auf Basis der folgenden Formel zu bestimmen, Rₒₚ = Uₒₚ/Iₒₚ, wobei Rₒₚ dem elektrischen Betriebswiderstand des Elektromotors bei der Betriebstemperatur entspricht, wobei Uₒₚ der erfassten elektrischen Betriebsspannung des Elektromotors bei der Betriebstemperatur entspricht, und wobei I_{ref} der erfassten elektrischen Betriebsstromstärke des Elektromotors bei der Betriebstemperatur entspricht, und ist die Steuerung insbesondere ausgebildet, während des Betriebs des Antriebs die Betriebstemperatur des Elektromotors auf Basis der folgenden Formel zu bestimmen, Tₒₚ = T_{ref} + ([Rₒₚ/R_{ref}- 1] / α), wobei Tₒₚ der Betriebstemperatur des Elektromotors entspricht, wobei T_{ref} der Referenztemperatur des Elektromotors entspricht, wobei Rₒₚ dem bestimmten elektrischen Betriebswiderstand des Elektromotors entspricht, wobei R_{ref} dem bestimmten elektrischen Referenzwiderstand des Elektromotors entspricht, und wobei α einem materialabhängigen Temperaturkoeffizienten entspricht.

Dadurch wird der technische Vorteil erreicht, dass mittels des Ohm'schen Gesetzes durch die Steuerung auf eine einfache Weise aus der elektrischen Betriebsspannung und der elektrischen Betriebsstromstärke des Elektromotors auf den elektrischen Betriebswiderstand des Elektromotors ermittelt werden kann.

Durch die entsprechende Abhängigkeit zwischen dem elektrischen Betriebswiderstand, dem elektrischen Referenzwiderstand und der Referenztemperatur des Elektromotors auf der einen Seite und der Betriebstemperatur auf der anderen Seite kann mittels mathematischer Berechnung, durch die Steuerung einfach und vorteilhaft die Betriebstemperatur des Elektromotors auf Basis von der erfassten Referenztemperatur des Elektromotors, sowie dem erfassten elektrischen Betriebswiderstand und dem erfassten elektrischen Referenzwiderstand des Elektromotors bestimmt werden.

In einer vorteilhaften Ausführungsform umfasst die Steuerung ein elektrisches Stromerfassungselement, wobei das elektrische Stromerfassungselement ausgebildet ist, bei der durch den Temperatursensor erfassten Referenztemperatur die an dem Elektromotor anliegende elektrische Referenzspannung und elektrische Referenzstromstärke zu erfassen, und wobei das elektrische Stromerfassungselement ausgebildet ist bei der Betriebstemperatur die an dem Elektromotor anliegende elektrische Betriebsspannung und elektrische Betriebsstromstärke zu erfassen.

Dadurch wird der technische Vorteil erreicht, dass das elektrische Stromerfassungselement der Steuerung, ein wirksames Erfassen der jeweiligen an dem Elektromotor anliegenden Spannung, bzw. Stromstärke ermöglicht. Hierbei wird insbesondere durch die Steuerung nur die jeweilige Stromstärke sowie die jeweilige vorgelagerte Zwischenkreisspannung gemessen, wobei die effektive Ausgangsspannung hierbei durch Korrekturfaktoren ermittelt wird.

In einer vorteilhaften Ausführungsform ist das Haushaltsgerät ein Wäschepflegegerätzum Pflegen von Wäsche, wobei das Wäschepflegegerät eine Wäschetrommel zum Aufnehmenvon Wäsche umfasst, wobei der Antrieb ein Trommelantrieb zum Antreiben der Wäschetrommel ist, und wobei der Elektromotor des Trommelantriebs ausgebildet ist, die Wäschetrommel zu rotieren, und/oder ist das Haushaltsgerät ein Wäschepflegegerät zum Pflegen von Wäsche, wobei das Wäschepflegegeräteinen Laugenbehälter zum Aufnehmen von Waschflüssigkeit umfasst, wobei das Wäschepflegegerät eine Pumpe zum Umpumpen von Waschflüssigkeit in dem Laugenbehälter und/oder zum Abpumpen von Waschflüssigkeit aus dem Laugenbehälter umfasst, wobei der Antrieb ein Pumpenantrieb zum Antreiben der Pumpe des Wäschepflegegeräts ist, und wobei der Elektromotor des Pumpenantriebs ausgebildet ist, die Pumpe anzutreiben, um Waschflüssigkeit in dem Laugenbehälter umzupumpen und/oder um Waschflüssigkeit aus dem Laugenbehälterabpumpen, und/oder ist das Haushaltsgerät ein Wäschepflegegerät zum Pflegen von Wäsche, wobei das Wäschepflegegerät eine Lüftungseinheit mit einem rotierbaren Impeller zum Trocknen der in der Wäschetrommel aufgenommenen Wäsche aufweist, wobei der Antrieb ein Impellerantrieb zum Antreiben des Impellers ist, und wobei der Elektromotor des Impellerantriebs ausgebildet ist, den Impeller anzutreiben, um die Wäsche in der Wäschetrommel zu trocknen.

Dadurch wird der technische Vorteil erreicht, dass der Elektromotorgemäß der vorliegenden Offenbarung in einer Vielzahl von unterschiedlichen Antrieben eines Wäschepflegegeräts eingesetzt werden kann, wie z.B. in einem Trommelantrieb, einem Pumpenantrieb, und/oder einem Impellerantrieb.

In einer vorteilhaften Ausführungsform ist der Temperatursensor des Haushaltsgeräts, insbesondere Wäschepflegegerät, ein von dem Elektromotor beabstandet in dem Haushaltsgerät, insbesondere Wäschepflegegerät, angeordneter Temperatursensor, wobei der Temperatursensor insbesondere nicht direkt mit dem Elektromotor thermisch gekoppelt ist.

Dadurch wird der technische Vorteil erreicht, dass ein beliebiger Temperatursensor des Haushaltsgeräts zum Bestimmen der Referenztemperatur verwendet werden kann, so dass keine weiteren direkt am Elektromotor befestigten Temperatursensoren benötigt werden. Beispielsweise kann die Referenzmessung unmittelbar nach dem Aktivieren des Haushaltsgeräts erfolgen, so dass alle Bauteile des Haushaltsgeräts dieselbe Temperatur aufweisen, wobei in diesem Fall die durch den von dem Elektromotor beabstandeten Temperatursensor erfasste Referenztemperaturidentisch mit der entsprechenden Referenztemperatur des Elektromotors ist.

Insbesondere ist der Temperatursensor des Wäschepflegeräts im Laugenbehälter des Wäschepflegeräts angeordnet, und/oder ist insbesondere der Temperatursensor des Wäschepflegeräts in oder an der Steuerung des Wäschepflegegeräts angeordnet.

Erfindungsgemäß ist die Steuerung ausgebildet, den elektrischen Referenzwiderstand des Elektromotors bei der Aktivierung, insbesondere unmittelbar nach der Aktivierung, des Haushaltsgeräts, insbesondere als zu bestimmen. Dadurch wird der technische Vorteil erreicht, dass bei der Aktivierung, bzw. unmittelbar nach der Aktivierung des Wäschepflegegeräts der entsprechende Antrieb noch nicht mit Strom beaufschlagt wurde, und damit eine Temperatur aufweist, welcher der Umgebung des Wäschepflegegeräts entspricht, so dass eine vorteilhafte Bestimmung der Referenztemperatur durchgeführt wird, insbesondere durch einen von dem Antrieb beabstandet in dem Haushaltsgerät angeordneten Temperatursensor.

In einer vorteilhaften Ausführungsform ist in der Steuerung ein Nominalwiderstandsbereich des Elektromotors hinterlegt, wobei der Nominalwiderstandsbereich des Elektromotors insbesondere durch den Hersteller des Elektromotors festgelegt ist, wobei der Nominalwiderstandsbereich insbesondere einen Nominalwiderstandswert und einen Toleranzbereich umfasst, um den Nominalwiderstandsbereich festzulegen, wobei die Steuerung ausgebildet ist, den bestimmten elektrischen Referenzwiderstand des Elektromotors mit dem Nominalwiderstandsbereich des Elektromotors zu vergleichen, wobei die Steuerung ausgebildet ist, während des Betriebs des Antriebs die Betriebstemperatur des Elektromotors in Abhängigkeit von der an dem Elektromotor anliegenden elektrischen Betriebsspannung und elektrischen Betriebsstromstärke, sowie in Abhängigkeit des bestimmten Referenzwiderstands zu bestimmen, wenn der bestimmte elektrische Referenzwiderstand des Elektromotors innerhalb des Nominalwiderstandsbereichs des Elektromotors liegt.

Dadurch wird der technische Vorteil erreicht, dass die Berücksichtigung des Nominalwiderstandsbereichs des Elektromotors bei der Bestimmung des elektrischen Referenzwiderstands des Elektromotors durch die Steuerung sicherstellt, dass eine fehlerhafte Bestimmung deselektrischen Referenzwiderstands des Elektromotors ausgeschlossen werden kann.

In einer vorteilhaften Ausführungsform ist die Steuerung ausgebildet, den Nominalwiderstand des Elektromotors als elektrischen Referenzwiderstand des Elektromotors festzulegen, wenn der bestimmte elektrische Referenzwiderstand des Elektromotors außerhalb des Nominalwiderstandsbereichs des Elektromotors liegt.

Dadurch wird der technische Vorteil erreicht, dass bei einer offensichtlich fehlerhaften Bestimmung des elektrischen Referenzwiderstands, welcher außerhalb des Nominalwiderstandsbereichs des Elektromotors liegt, der Nominalwiderstand des Elektromotors eine genauere Abschätzung des elektrischen Referenzwiderstand des Elektromotors bereitstellt, und somit stattdessen von der Steuerung berücksichtigt wird.

In einer vorteilhaften Ausführungsform weist der Elektromotor des Antriebs einen Stator und einen Rotor auf, wobei der Stator und/oder Rotor jeweils zumindest eine elektrische Spule aufweist, und wobei die Steuerung ausgebildet ist, bei der erfassten Referenztemperatur den elektrischen Referenzwiderstand der zumindest einen elektrischen Spule des Elektromotors in Abhängigkeit von einer an der zumindest einen elektrischen Spule des Elektromotors anliegenden elektrischen Referenzspannung und elektrischen Referenzstromstärke zu bestimmen, und wobei die Steuerung ausgebildet ist, während des Betriebs des Antriebs die Betriebstemperatur der zumindest einen elektrischen Spule des Elektromotors in Abhängigkeit einer an der zumindest einen elektrischen Spule des Elektromotors anliegenden elektrischen Betriebsspannung und elektrischen Betriebsstromstärke, sowie in Abhängigkeit des bestimmten Referenzwiderstands und der Referenztemperatur zu bestimmen, wobei insbesondere der Rotor einen Permanentmagneten und der Stator die zumindest eine elektrische Spule umfasst.

Dadurch wird der technische Vorteil erreicht, dass durch das Abgreifen der entsprechenden Spannungs- und Stromstärkewerte an der entsprechenden zumindest einen elektrischen Spule des Elektromotors eine besonders vorteilhafte Bestimmung der Betriebstemperatur des Elektromotors sichergestellt werden kann.

In einer vorteilhaften Ausführungsform ist die Steuerung ausgebildet, den Elektromotor des Antriebs zu deaktivieren oder die Drehzahl und/oder Anschaltdauer des Elektromotors des Antriebs zu reduzieren, wenn die bestimmte Betriebstemperatur des Elektromotors zumindest eine Zieltemperatur überschreitet.

Dadurch wird der technische Vorteil erreicht, dass die Zieltemperatur eine Temperaturgrenze vorgibt, oberhalb dieser es zu einer Beschädigung des Elektromotors kommen kann, so dass durch das Deaktivieren des Antriebs, bzw. durch das Reduzieren der Drehzahl und/oder der Anschaltdauer des Elektromotors die durch den Elektromotor verursachte Freisetzung von Wärme begrenzt werden kann, und damit eine Beschädigung des Elektromotors verhindert werden kann.

In einer vorteilhaften Ausführungsform ist die Steuerung ausgebildet, die Drehzahl und/oder Anschaltdauer des Elektromotors des Antriebs zu reduzieren, wenn die bestimmte Betriebstemperatur des Elektromotors eine erste Zieltemperatur überschreitet, jedoch geringer als eine zweite Zieltemperatur ist, und/oder ist die Steuerung ausgebildet, den Elektromotor des Antriebs zu deaktivieren, wenn die bestimmte Betriebstemperatur des Elektromotors die zweite Zieltemperatur überschreitet, wobei die zweite Zieltemperatur größer als die erste Zieltemperatur ist.

Dadurch wird der technische Vorteil erreicht, dass durch die erste und zweite Zieltemperatur ein gestaffeltes Deaktivieren des Elektromotors ermöglicht wird. Überschreitet die bestimmte Betriebstemperatur des Elektromotors die erste Zieltemperatur, ist aber noch geringer als die zweite Zieltemperatur, dann kann die Steuerung versuchen durch eine Reduktion der Drehzahl und/oder Anschaltdauer des Elektromotors die Wärmefreisetzung so zu reduzieren, dass die bestimmte Betriebstemperatur des Elektromotors die zweite Zieltemperatur nicht überschreitet. Überschreitet die bestimmte Betriebstemperatur des Elektromotors jedoch die zweite Zieltemperatur, dann deaktiviert die Steuerung den Antrieb, um keine weitere Wärmefreisetzung durch den Elektromotor zu riskieren.

In einer vorteilhaften Ausführungsform umfasst der Elektromotor des Antriebs einen bürstenlosen Gleichstrommotor (BLDC-Motor) oder einen Permanentmagnet-Synchronmotor (PMSM).

Dadurch wird der technische Vorteil erreicht, dass die entsprechenden Motoren besonders vorteilhafte zur Betriebstemperaturmessung verwendet werden können.

Gemäß einem zweiten Aspekt wird die erfindungsgemäße Aufgabe gelöst durch ein Verfahren zum Bestimmen einer Betriebstemperatur eines Antriebs in einem Haushaltsgerät, wobei das Haushaltsgerät den Antrieb zum Antreiben eines beweglichen Elements des Haushaltsgeräts, wobei der Antrieb einen Elektromotor umfasst, welcher ausgebildet ist, das bewegliche Element zu bewegen, einen Temperatursensor zum Erfassen einer Temperatur, und einer Steuerung, welche steuerungstechnisch mit dem Antrieb und dem Temperatursensor verbunden ist, aufweist, wobei das Verfahren die folgenden Verfahrensschritte umfasst, Bestimmen eines elektrischen Referenzwiderstands des Elektromotors in Abhängigkeit von einer an dem Elektromotor anliegenden elektrischen Referenzspannung und elektrischen Referenzstromstärke bei einer durch den Temperatursensor erfassten Referenztemperatur durch die Steuerung, und Bestimmen der Betriebstemperatur des Elektromotors während des Betriebs des Antriebs in Abhängigkeit einer an dem Elektromotor anliegenden elektrischen Betriebsspannung und elektrischen Betriebsstromstärke, sowie in Abhängigkeit des bestimmten Referenzwiderstands und der Referenztemperatur durch die Steuerung.

Dadurch wird der technische Vorteil erreicht, dass eine vorteilhafte Messung der Betriebstemperatur des Elektromotors sichergestellt werden kann.

In einer vorteilhaften Ausführungsform umfasst das Verfahren den weiteren Verfahrensschritt, Deaktivieren des Elektromotors des Antriebs oder Reduzieren der Drehzahl des Elektromotors des Antriebs oder Reduzieren der Anschaltdauer des Elektromotors des Antriebs, wenn die bestimmte Betriebstemperatur des Elektromotors zumindest eine Zieltemperatur überschreitet.

Dadurch wird der technische Vorteil erreicht, dass sichergestellt werden kann, dass keine Beschädigung des Elektromotors durch zu hohe Betriebstemperaturen auftritt.

Ausführungsbeispiele der Erfindung sind in den Zeichnungen dargestellt und werden im Folgenden näher beschrieben.

Es zeigen:
- Fig. 1: eine schematische Ansicht eines Wäschepflegegeräts als ein Haushaltsgerät gemäß einer Ausführungsform;
- Fig. 2: eine schematische Ansicht eines Wäschepflegegeräts mit einem Antrieb als ein Haushaltsgerät gemäß einer Ausführungsform;
- Figs. 3A, 3B: graphische Darstellungen von Betriebstemperaturerfassungen eines Elektromotors eines Antriebs gemäß Ausführungsformen; und
- Fig. 4: eine schematische Darstellung eines Verfahrens zum Bestimmen einer Betriebstemperatur eines Antriebs in einem Haushaltsgerät.

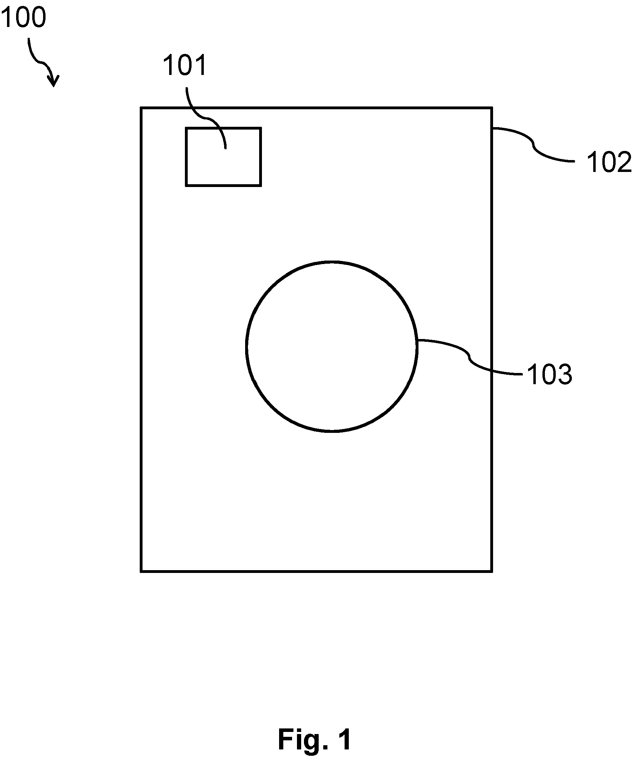

Fig. 1 zeigt eine schematische Ansicht eines allgemeinen Wäschepflegegeräts 100-1, wie z.B. eine Waschmaschine, als ein exemplarisches Beispiel für ein Haushaltsgerät 100. Das Wäschepflegegerät 100-1 umfasst eine Einspülschale 101, in die Wäschepflegesubstanz, wie z.B. Waschmittel oder andere flüssige Substanzen eingefüllt werden kann. Das Wäschepflegegerät 100-1 weist ein Gerätegehäuse 102 auf. Das Wäschepflegegerät 100-1 umfasst eine Gerätetür 103 zum Beladen des Wäschepflegegerätes 100-1 mit Wäsche.

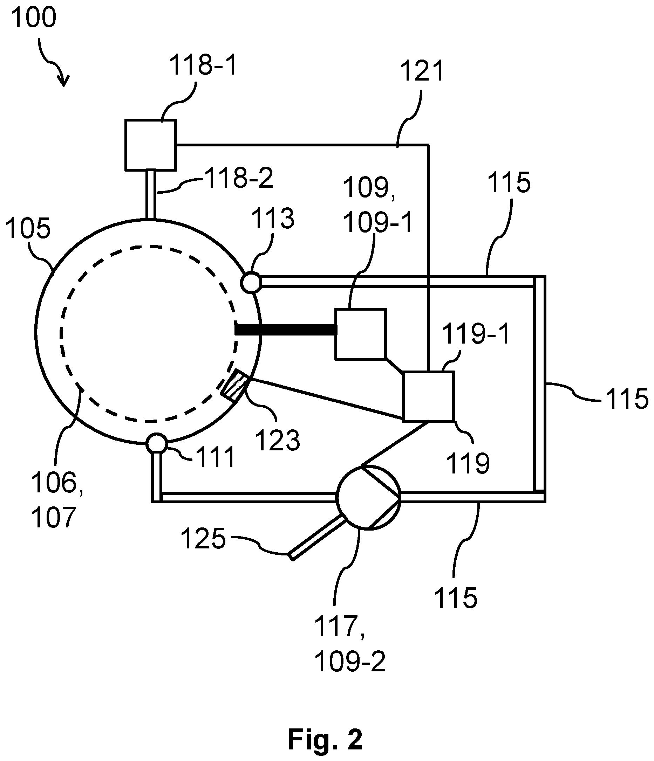

Fig. 2 zeigt eine schematische Ansicht eines Wäschepflegegeräts mit einem Antrieb, als ein exemplarisches Beispiel für ein Haushaltsgerät 100. Das Wäschepflegegerät 100-1 weist einen Laugenbehälter 105 zur Aufnahme von Waschflüssigkeit auf, und weist eine Wäschetrommel 107 zur Aufnahme von Wäsche auf. Die Wäschetrommel 107 ist in dem Laugenbehälter 105 angeordnet. Das Wäschepflegegerät 100-1 weist einen Antrieb 109, insbesondere einen Trommelantrieb 109-1 zum Rotieren der Wäschetrommel 107 auf. Die Wäschetrommel 107 entspricht somit einem beweglichen Element 106 des Haushaltsgeräts 100, bzw. des Wäschepflegegeräts 100-1. Der Antrieb 109, insbesondere Trommelantrieb 109-1, umfasst einen in Fig. 2 nicht dargestellten Elektromotor. Der Laugenbehälter 105 weist eine Ablassöffnung 111 auf. Das Wäschepflegegerät 100-1 weist ein Zuführelement 113 auf. Die Ablassöffnung 111 ist durch eine Flüssigkeitsleitung 115 mit dem Zuführelement 113 fluidtechnisch verbunden, wobei in der Flüssigkeitsleitung 115 eine Pumpe 117 zum Pumpen von Waschflüssigkeit durch die Flüssigkeitsleitung 115 angeordnet ist.

Die Pumpe 117 kann Waschflüssigkeit durch die Ablassöffnung 111 aus dem Laugenbehälter 105 während eines in Fig. 2 nicht dargestellten Umpumpvorgangs in die Flüssigkeitsleitung 115 pumpen und die Waschflüssigkeit durch die Flüssigkeitsleitung 115 und durch das Zuführelement 113 dem Laugenbehälter 105 und der Wäschetrommel 107 erneut zuführen. Dadurch kann die Waschflüssigkeit während eines Wäschepflegeprozesses wirksam durch die Flüssigkeitsleitung 115 umgepumpt werden und der Wäsche in der Wäschetrommel 107 erneut zugeführt werden. Auch wenn dies in Fig. 2 nicht explizit dargestellt ist, wird auch diePumpe 117 durcheinen Antrieb 109, insbesondere Pumpenantrieb 109-2, angetrieben, welcher einen in Fig. 2 nicht dargestellten Elektromotor umfasst. Insbesondere umfasst die Pumpe 117 ein in Fig. 2 nicht dargestelltes Laufrad, bzw. Impeller als ein bewegliches Element 106, welches durch den Antrieb109, insbesondere Pumpenantrieb 109-2 bewegt, insbesondere rotiert wird, um die Pumpwirkung sicherzustellen.

Das Wäschepflegegerät 100-1 weist eine Waschflüssigkeitszuführeinrichtung 118-1 zum Zuführen von Waschflüssigkeit in den Laugenbehälter 105 auf, wobei die Waschflüssigkeitszuführeinrichtung 118-1 durch eine Zuführleitung 118-2 mit dem Laugenbehälter 105 verbunden ist.

Insbesondere umfasst die Waschflüssigkeitszuführeinrichtung 118-1 eine in Fig. 2 nicht dargestellte Einspülschale 101 des Wäschepflegegeräts 100-1 und/oder einen in Fig. 2 nicht dargestellten Frischwasseranschluss des Wäschepflegegeräts 100-1, wobei die Steuerung 119 ausgebildet ist, einen Waschflüssigkeitszulauf über die Einspülschale 101 und/oder den Frischwasseranschluss zu aktivieren, um Waschflüssigkeit und/oder Frischwasser als Waschflüssigkeit in die Wäschetrommel 107 zuzuführen.

Das Wäschepflegegerät 100-1 weist ferner einen Temperatursensor 123 zum Erfassen einer Temperatur von Waschflüssigkeit in dem Laugenbehälter 105 auf. Insbesondere ist der Temperatursensor 123 in dem Laugenbehälter 105 angeordnet.

Alternativ kann der Temperatursensor 123 insbesondere außerhalb des Laugenbehälters 105 angeordnet sein und kann beispielsweise einen Temperatursensor 123 des Wäschepflegegeräts 100-1 umfassen, welcher beispielsweise ausgebildet ist, eine Temperatur der in Fig.1 dargestellten Steuerung 119 des Wäschepflegegeräts 100-1 zu erfassen.

Das Wäschepflegegerät 100-1 umfasst ferner eine Steuerung 119, welche mit der Pumpe 117, insbesondere mit dem Pumpenantrieb 109-2, welche mit dem Antrieb 109, insbesondere Trommelantrieb 109-1, mit der Waschflüssigkeitszuführeinrichtung 118-1 und mit dem Temperatursensor 123 jeweils durch eine Steuerverbindung 121 verbunden ist.

Das Wäschepflegegerät 100-1 umfasst ferner eine Auslassleitung 125, welche mit der Flüssigkeitsleitung 115 fluidtechnisch verbunden ist. Die Pumpe 117 ist ausgebildet während eines in Fig. 2 nicht dargestellten Abpumpvorgangs Waschflüssigkeit durch die Ablassöffnung 111 aus dem Laugenbehälter 105, durch die Flüssigkeitsleitung 115 und durch die Auslassleitung 125 aus dem Wäschepflegegerät 100-1 abzupumpen.

Gemäß der vorliegenden Offenbarung ist die Steuerung 119 ausgebildet, beieiner durch den Temperatursensor 123 erfassten Referenztemperatur, z.B. insbesondere 20°C, einen elektrischen Referenzwiderstand des Elektromotors des Antriebs 109, insbesondere Trommelantrieb 109-1 und/oder Pumpenantrieb 109-2 in Abhängigkeit von einer an dem Elektromotor anliegenden elektrischen Referenzspannung und elektrischen Referenzstromstärke zu bestimmen.

Hierbei umfasst die Steuerung 119 insbesondere ein in Fig. 2 lediglich schematisch dargestelltes elektrisches Stromerfassungselement 119-1, welches ausgebildet ist, bei der durch den Temperatursensor 123 erfassten Referenztemperatur die an dem Elektromotor anliegende elektrische Referenzspannung und elektrischen Referenzstromstärke zu erfassen.

Insbesondere ist die Steuerung 119 ausgebildet den elektrischen Referenzwiderstand des Elektromotors auf Basis der folgenden Formel zu bestimmen, R_{ref} = U_{ref}/I_{ref}, wobei R_{ref} dem elektrischen Referenzwiderstand des Elektromotors bei der durch den Temperatursensor 123 erfassten Referenztemperatur entspricht, wobei U_{ref} der elektrischen Referenzspannung des Elektromotors bei der durch den Temperatursensor 123 erfassten Referenztemperatur entspricht, und wobei I_{ref} der erfassten elektrischen Referenzstromstärke des Elektromotors bei der durch den Temperatursensor 123 erfassten Referenztemperatur entspricht.

Hierbei ist die Steuerung 119 insbesondere ausgebildet, den elektrischen Referenzwiderstand des Elektromotors bei der Aktivierung, insbesondere unmittelbar nach der Aktivierung, des Wäschepflegegeräts 101-1 zu bestimmen.

Wie aus der Fig. 2 der vorliegenden Offenbarung zu entnehmen ist, ist der Temperatursensor 123, ein von dem Elektromotor beabstandet in dem Wäschepflegegerät 100-1, angeordneter Temperatursensor 123, wobei der Temperatursensor 123 insbesondere nicht direkt mit dem Elektromotor thermisch gekoppelt ist. Dies trifft sowohl auf den Elektromotor desTrommelantriebs109-1 als auch auf den Elektromotor des Pumpenantriebs 109-2 zu.

Da die Messung der Referenztemperatur durch den Temperatursensor 123 jedoch bei der Aktivierung des Wäschepflegegeräts101-1 erfolgt, weisen alle Bauteile des Wäschepflegegeräts100-1 dieselbe Temperatur, nämlich die Temperatur des Aufstellungsraums des Wäschepflegegeräts 100-1 auf, so dass unabhängig von der nicht vorhandenen direkten thermischen Kopplung zwischen dem Temperatursensor 123 und dem Elektromotor, die durch den Temperatursensor 123 erfasste Referenztemperatur mit der entsprechenden Temperatur des Elektromotors sowohl des Trommelantriebs 109-1 als auch des Pumpenantriebs 109-2 nach dem Aktivieren des Wäschepflegegeräts 100-1 übereinstimmt.

Nach dem Bestimmen des elektrischen Referenzwiderstands des Elektromotors ist die Steuerung 119 ausgebildet, während des Betriebs des Antriebs 109, insbesondere Trommelantrieb 109-1 und/oder Pumpenantrieb 109-2, die Betriebstemperatur des Elektromotors in Abhängigkeit von einer an dem Elektromotoranliegenden elektrischen Betriebsspannung und elektrischen Betriebsstromstärke, sowie in Abhängigkeit des bestimmten Referenzwiderstands zu bestimmen.

Das elektrische Stromerfassungselement 119-1 der Steuerung 119 ist hierbei insbesondere ausgebildet bei der Betriebstemperatur die an dem Elektromotor anliegende elektrische Betriebsspannung und elektrischen Betriebsstromstärke zu erfassen.

Insbesondere bestimmt die Steuerung 119 auf der Basis der erfassten elektrischen Betriebsstromstärke und der erfassten elektrischen Betriebsspannung zuerst einen Betriebswiderstand, und bestimmt die Steuerung 119 anschließend basierend auf dem bestimmten Betriebswiderstand und des bestimmten Referenzwiderstands die Betriebstemperatur des Elektromotors.

Hierbei ist die Steuerung 119 insbesondere ausgebildet, den elektrischen Betriebswiderstand des Elektromotors auf Basis der folgenden Formel zu bestimmen, Rₒₚ = Uₒₚ/Iₒₚ, wobei Rₒₚ dem elektrischen Betriebswiderstand des Elektromotors bei der Betriebstemperatur entspricht, wobei Uₒₚ der erfassten elektrischen Betriebsspannung des Elektromotors bei der Betriebstemperatur entspricht, und wobei I_{ref} der erfassten elektrischen Betriebsstromstärke des Elektromotors bei der Betriebstemperatur entspricht.

Anschließend ist die Steuerung 119 insbesondere ausgebildet, während des Betriebs des Antriebs 109 die Betriebstemperatur des Elektromotors auf Basis der folgenden Formel zu bestimmen, Tₒₚ = T_{ref} + ([Rₒₚ/R_{ref} - 1] / α), wobei Tₒₚ der Betriebstemperatur des Elektromotors entspricht, wobei T_{ref} der Referenztemperatur des Elektromotors entspricht, wobei Rₒₚ dem bestimmten elektrischen Betriebswiderstand des Elektromotors entspricht, wobei R_{ref} dem bestimmten elektrischen Referenzwiderstand des Elektromotors entspricht, und wobei α einem materialabhängigen Temperaturkoeffizienten entspricht.

Somit ermöglicht die Steuerung 119 eine Bestimmung der Betriebstemperatur des Elektromotors des Antriebs 109 während des Betriebs des Elektromotors durch ein Abgreifen der erfassten elektrischen Betriebsspannung und elektrischen Betriebsstromstärke, sowie in Abhängigkeit des zuvor bestimmten elektrischen Referenzwiderstands des Elektromotors, ohne dass eine direkte Messung der Betriebstemperatur des Elektromotors, z.B. durch einen in dem Elektromotor angeordneten weiteren Temperatursensor, benötigt wird. Die entsprechende Bestimmung der Betriebstemperatur des Elektromotors beruht auf einer Abhängigkeit zwischen der an dem Elektromotor anliegenden Temperatur und dem elektrischen Widerstand des Elektromotors.

Die Bestimmung der Betriebstemperatur des Elektromotors ist insbesondere deshalb von entscheidender Bedeutung, als dass sichergestellt werden muss, dass die Betriebstemperatur des Elektromotors nicht zu stark ansteigt, um eine Hitze-bedingte Beschädigung des Elektromotors zu vermeiden.

Aus diesem Grund ist die Steuerung 119 insbesondere ausgebildet, den Elektromotor des Antriebs 109, insbesondere Trommelantrieb109-1 und/oder Pumpenantrieb 109-2, zu deaktivieren oder die Drehzahl und/oder Anschaltdauer des Elektromotors des Antriebs 109 zu reduzieren, wenn die bestimmte Betriebstemperatur des Elektromotors zumindest eine Zieltemperatur überschreitet.

Die Zieltemperatur dient hierbei als Grenzwert bei dessen Überschreiten durch die Steuerung 119 die mit dem Stromverbrauch korrelierende Temperatur durch die Deaktivierung, bzw. Reduzierung der Drehzahl und/oder Anschaltdauer des Elektromotors wieder in einen akzeptablen Temperaturbereich absinkt.

Die Steuerung 119 ist hierbei insbesondere ausgebildet, die Drehzahl und/oder Anschaltdauer des Elektromotors des Antriebs 109 zu reduzieren, wenn die bestimmte Betriebstemperatur des Elektromotors eine erste Zieltemperatur überschreitet, jedoch geringer als eine zweite Zieltemperatur ist, und/oder die Steuerung 119 ist insbesondere ausgebildet, den Elektromotor des Antriebs 109 zu deaktivieren, wenn die bestimmte Betriebstemperatur des Elektromotors eine zweite Zieltemperatur überschreitet, wobei die zweite Zieltemperatur größer als die erste Zieltemperatur ist.

Hierbei kann somit durch die Steuerung 119 stufenweise reagiert werden, indem z.B. beim Überschreiten der niedrigeren ersten Zieltemperatur zuerst die Drehzahl und/oder Anschaltdauer des Elektromotors des Antriebs109 reduziert wird, um ein weiteres Ansteigen der Betriebstemperatur des Antriebs 109zu verhindern. Sollte die bestimmte Betriebstemperatur des Antriebs 109 jedoch weiter ansteigen, und die höhere zweite Zieltemperatur überschreiten, dann deaktiviert die Steuerung 119 den Elektromotor vollständig.

Der Elektromotor des Antriebs 109 umfasst insbesondere einen bürstenlosen Gleichstrommotor (BLDC-Motor) oder einen Permanentmagnet-Synchronmotor (PMSM).

Der Elektromotor des Antriebs 109 weist insbesondere einen Stator und einen Rotor auf, wobei der Stator und/oder Rotor jeweils zumindest eine elektrische Spule aufweist, und wobei die Steuerung 119 ausgebildet ist, bei der erfassten Referenztemperatur den elektrischen Referenzwiderstand der zumindest einen elektrischen Spule des Elektromotors in Abhängigkeit von einer an der zumindest einen elektrischen Spule des Elektromotors anliegenden elektrischen Referenzspannung und elektrischen Referenzstromstärke zu bestimmen, und wobei die Steuerung 119ausgebildet ist, während des Betriebs des Antriebs 109 die Betriebstemperatur der zumindest einen elektrischen Spule des Elektromotors in Abhängigkeit einer an der zumindest einen elektrischen Spule des Elektromotors anliegenden elektrischen Betriebsspannung und elektrischen Betriebsstromstärke, sowie in Abhängigkeit des bestimmten Referenzwiderstands und der Referenztemperatur zu bestimmen. Insbesondere umfasst der Rotor einen Permanentmagneten und umfasst der Stator die zumindest eine elektrische Spule.

Somit kann ein Abgriff der Referenzspannung, bzw. der elektrischen Betriebsspannung und elektrischen Referenzstromstärke, bzw. der elektrischen Betriebsstromstärke, direkt an der zumindest einen elektrischen Spule des Elektromotors erfolgen.

Hierbei wird durch die Bestimmung der Betriebstemperatur des Elektromotors die Genauigkeit der Temperaturmessung insbesondere dadurch erhöht, dass in anderen Worten "direkt innerhalb" des Elektromotors die Temperatur durch die elektrischen Parameter bestimmt wird, ohne dass mit einem Temperatursensor während des Betriebs gemessen wird. Durch die höhere Genauigkeit dieser Temperaturbestimmung gemäß der vorliegenden Offenbarung kommt es somit zu keinem vorzeitigen Abschalten des Antriebs 109 und der gesamte Temperaturbereich steht für die Verfahrenstechnik zur Verfügung.

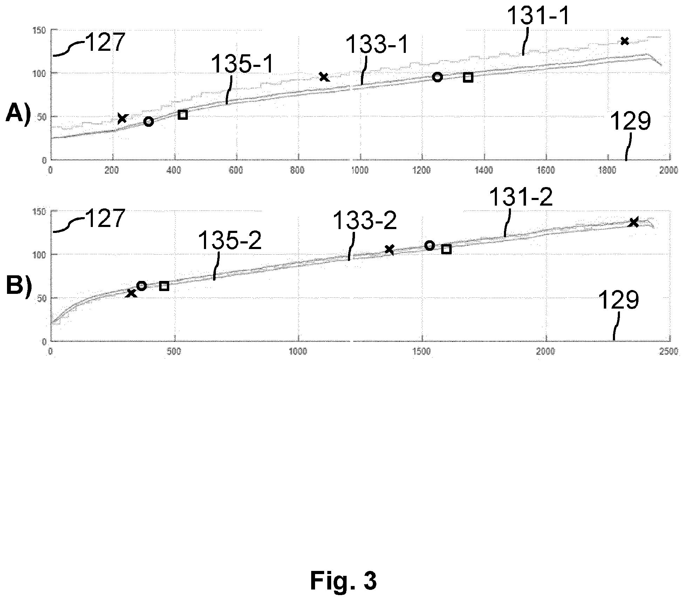

Die Figuren 3A und 3B zeigen graphische Darstellungen von Betriebstemperaturerfassungen eines Elektromotors eines Antriebs gemäß Ausführungsformen.

Die in den Figuren 3A und Figuren 3B gezeigte jeweilige Ordinatenachse 127 zeigt die Temperatur (in °C) in Abhängigkeit von der Zeit (in sec), welche entlang der jeweiligen Abszissenachse 129 angetragen ist.

Die in der Figur 3A gezeigte erste Kurve 131-1und die in der Figur 3B gezeigte zweite Kurve 131-2 zeigt eine Betriebstemperatur eines Elektromotors eines Antriebs 109, insbesondere Trommelantriebs 109-1, welche wie in der Fig. 2 beschrieben wurde, in Abhängigkeit der an dem Elektromotor anliegenden Stromparameter bestimmt wird, wobei die jeweilige erste Kurve 131-1, bzw. 131-2 durch Kreuzmarkierungen hervorgehoben ist.

Die in den Figuren 3A und 3B gezeigte jeweilige zweite Kurve 133-1, 133-2 (markiert durch Kreise) zeigt eine direkte und unmittelbare Temperaturmessung einer ersten Spule des Elektromotors des Antriebs 109, insbesondere Trommelantriebs 109-1, durch ein externes Temperaturmessgerät.

Die in den Figuren 3A und 3B gezeigte jeweilige dritte Kurve135-1, 135-2 (markiert durch Quadrate) zeigt eine direkte und unmittelbare Temperaturmessung einer zweiten Spule des Elektromotors des Antriebs 109, insbesondere Trommelantriebs 109-1, durch ein externes Temperaturmessgerät.

Aus den in Fig. 3A gezeigten ersten, zweiten und dritten Kurve 131-1, 133-1, und 135-1 geht hervor, dass die direkte und unmittelbare Temperaturmessung durch ein externes Temperaturmessgerät gemäß der zweiten und dritten Kurve 133-1, 135-1 zu Temperaturwerten führt, welche unterhalb der entsprechenden durch die Steuerung bestimmten Betriebstemperatur liegt gemäß der ersten Kurve 131-1.

In der Ausführungsform der Fig. 3B liegen die jeweiligen ersten, zweiten und dritten Kurven 131-2, 133-2, und 135-2 aufeinander, so dass in diesem Fall eine besonders vorteilhafte Korrelation zwischen der direkten und unmittelbaren Temperaturmessung gemäß der zweiten und dritten Kurve 133-2, 135-2und der entsprechenden durch die Steuerung bestimmten Betriebstemperaturgemäß der ersten Kurve 131-2.

Die entsprechende vorteilhafte Kalibrierung gemäß der Fig. 3B beruht auf der Berücksichtigung des Nominalwiderstands des Elektromotors des Antriebs109, welche wie folgt ausgeführt wird.

Zur Optimierung der Genauigkeit der Temperaturmessung kann durch die Steuerung 119 der bestimmte elektrische Referenzwiderstand mit einem Nominalwiderstandsbereich des Elektromotors des Antriebs 109 verglichen werden, wobei der Nominalwiderstandsbereich des Elektromotors in der Steuerung 119 hinterlegt ist, wobei der Nominalwiderstandsbereich des Elektromotors insbesondere durch den Hersteller des Elektromotors festgelegt ist, wobei der Nominalwiderstandsbereich einen Nominalwiderstand und einen Toleranzbereich umfasst, um den Nominalwiderstandsbereich festzulegen. Hierbei ist die Steuerung 119 insbesondere ausgebildet, den bestimmten elektrischen Referenzwiderstand des Elektromotors mit dem Nominalwiderstandsbereich des Elektromotors zu vergleichen, wobei die Steuerung 119 ausgebildet ist, während des Betriebs des Antriebs 109 die Betriebstemperatur des Elektromotors in Abhängigkeit von der an dem Elektromotor anliegenden elektrischen Betriebsspannung und elektrischen Betriebsstromstärke, sowie in Abhängigkeit des bestimmten Referenzwiderstands und der Referenztemperatur zu bestimmen, wenn der bestimmte elektrische Referenzwiderstand des Elektromotors innerhalb des Nominalwiderstandsbereichs des Elektromotors liegt.

Die Steuerung 119 ist ausgebildet, den Nominalwiderstand des Elektromotors als elektrischen Referenzwiderstand des Elektromotors festzulegen, wenn der bestimmte elektrische Referenzwiderstand des Elektromotors außerhalb des Nominalwiderstandsbereichs des Elektromotors liegt. Somit wird in diesem Fall bei einer möglicherweise fehlerhaften Bestimmung des elektrischen Referenzwiderstands des Elektromotors, der Nominalwiderstand des Elektromotors als elektrischer Referenzwiderstands des Elektromotors festgelegt.

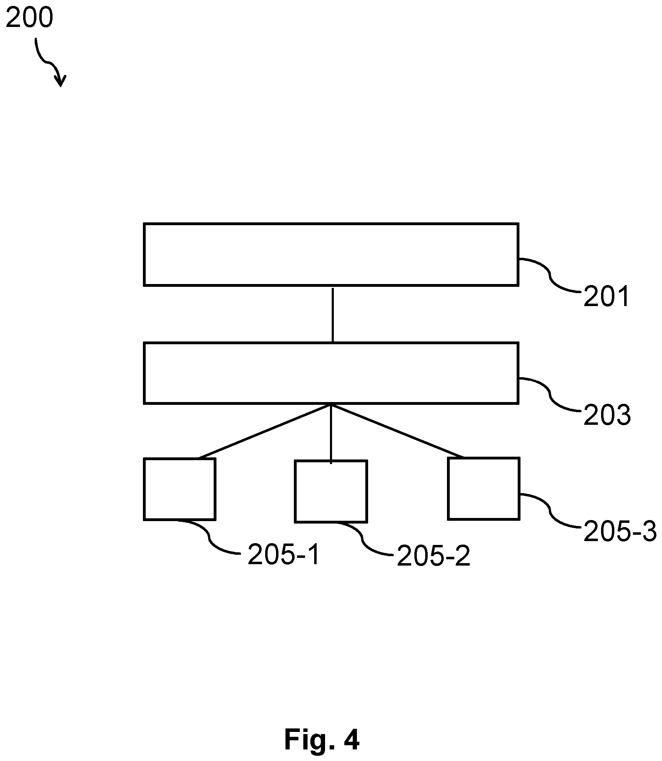

Fig. 4 zeigt eine schematische Darstellung eines Verfahrens zum Bestimmen einer Betriebstemperatur eines Antriebs in einem Haushaltsgerät.

Das Verfahren 200 umfasst als ersten Verfahrensschritt das Bestimmen 201 eines elektrischen Referenzwiderstands des Elektromotors in Abhängigkeit von einer an dem Elektromotor anliegenden elektrischen Referenzspannung und elektrischen Referenzstromstärke bei einer durch den Temperatursensor 123 erfassten Referenztemperatur durch die Steuerung 119.

Das Verfahren 200 umfasst als zweiten Verfahrensschritt das Bestimmen 203 der Betriebstemperatur des Elektromotors während des Betriebs des Antriebs 109 in Abhängigkeit einer an dem Elektromotor anliegenden elektrischen Betriebsspannung und elektrischen Betriebsstromstärke, sowie in Abhängigkeit des bestimmten Referenzwiderstands und der Referenztemperatur durch die Steuerung 119.

Das Verfahren 200 umfasst als optionalen dritten Verfahrensschritt das Deaktivieren 205-1 des Elektromotors des Antriebs 109, wenn die bestimmte Betriebstemperatur des Elektromotors zumindest eine Zieltemperatur überschreitet.

Das Verfahren 200 umfasst als optionalen alternativen dritten Verfahrensschritt das Reduzieren 205-2 der Drehzahl des Elektromotors des Antriebs 109, wenn die bestimmte Betriebstemperatur des Elektromotors zumindest eine Zieltemperatur überschreitet.

Das Verfahren 200 umfasst als optionalen alternativen dritten Verfahrensschritt das Reduzieren 205-3 der Reduzieren der Anschaltdauer des Elektromotors des Antriebs 109, wenn die bestimmte Betriebstemperatur des Elektromotors zumindest eine Zieltemperatur überschreitet.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Haushaltsgerät
- 100-1: Wäschepflegegerät
- 101: Einspülschale
- 102: Gerätegehäuse
- 103: Gerätetür
- 105: Laugenbehälter
- 106: Bewegliches Element
- 107: Wäschetrommel
- 109: Antrieb
- 109-1: Trommelantrieb
- 109-2: Pumpenantrieb
- 111: Ablassöffnung
- 113: Zuführelement
- 115: Flüssigkeitsleitung
- 117: Pumpe
- 118-1: Waschflüssigkeitszuführeinrichtung
- 118-2: Zuführleitung
- 119: Steuerung
- 119-1: Stromerfassungselement
- 121: Steuerverbindung
- 123: Temperatursensor
- 125: Auslassleitung
- 127: Ordinatenachse
- 129: Abszissenachse
- 131-1: Erste Kurve
- 131-2: Weitere erste Kurve
- 133-1: Zweite Kurve
- 133-2: Weitere zweite Kurve
- 135-1: Dritte Kurve
- 135-2: Weitere dritte Kurve
- 200: Verfahren zum Bestimmen einer Betriebstemperatur eines Antriebs
- 201: Erster Verfahrensschritt: Bestimmen eines elektrischen Referenzwiderstands des Elektromotors
- 203: Zweiter Verfahrensschritt: Bestimmen der Betriebstemperatur des Elektromotors
- 205-1: Optionaler dritter Verfahrensschritt: Deaktivieren des Elektromotors
- 205-2: Optionaler alternativer dritter Verfahrensschritt: Reduzieren der Drehzahl des Elektromotors
- 205-3: Optionaler alternativer dritter Verfahrensschritt: Reduzieren der Anschaltdauer des Elektromotors

## Patentansprüche

1. Haushaltsgerät (100) mit einem Antrieb (109) zum Antreiben eines beweglichen Elements (106) des Haushaltsgeräts (100), wobei der Antrieb (109) einen Elektromotor umfasst, welcher ausgebildet ist, das bewegliche Element (106) zu bewegen, einer Steuerung (119), welche steuerungstechnisch mit dem Antrieb (109) verbunden ist, und einen Temperatursensor (123) zum Erfassen einer Temperatur, wobei die Steuerung (119) steuerungstechnisch mit dem Temperatursensor (123) verbunden ist,
**gekennzeichnet dadurch,**
**dass** die Steuerung (119) ausgebildet ist, bei einer durch den Temperatursensor (123) erfassten Referenztemperatur einen elektrischen Referenzwiderstand des Elektromotors in Abhängigkeit von einer an dem Elektromotor anliegenden elektrischen Referenzspannung und elektrischen Referenzstromstärke zu bestimmen, und
wobei die Steuerung (119) ausgebildet ist, während des Betriebs des Antriebs (109) die Betriebstemperatur des Elektromotors in Abhängigkeit von einer an dem Elektromotor anliegenden elektrischen Betriebsspannung und elektrischen Betriebsstromstärke, sowie in Abhängigkeit des bestimmten Referenzwiderstands und der Referenztemperatur zu bestimmen,
wobei die Steuerung (119) ausgebildet ist, den elektrischen Referenzwiderstand des Elektromotors bei der Aktivierung, insbesondere unmittelbar nach der Aktivierung, des Haushaltsgeräts (100) zu bestimmen.

2. Haushaltsgerät (100) nach Anspruch 1, **dadurch gekennzeichnet, dass** die Steuerung (119) ausgebildet ist, den elektrischen Referenzwiderstand des Elektromotors auf Basis der folgenden Formel zu bestimmen, R_{ref} = U_{ref}/I_{ref}, wobei R_{ref} dem elektrischen Referenzwiderstand des Elektromotors bei der durch den Temperatursensor (123) erfassten Referenztemperatur entspricht, wobei U_{ref} der elektrischen Referenzspannung des Elektromotors bei der durch den Temperatursensor (123) erfassten Referenztemperatur entspricht, und wobei I_{ref} der erfassten elektrischen Referenzstromstärke des Elektromotors bei der durch den Temperatursensor (123) erfassten Referenztemperatur entspricht.

3. Haushaltsgerät (100) nach Anspruch 2, **dadurch gekennzeichnet, dass** die Steuerung (119) ausgebildet ist, einen elektrischen Betriebswiderstand des Elektromotors auf Basis der folgenden Formel zu bestimmen, Rₒₚ = Uₒₚ/Iₒₚ, wobei Rₒₚ dem elektrischen Betriebswiderstand des Elektromotors bei der Betriebstemperatur entspricht, wobei Uₒₚ der erfassten elektrischen Betriebsspannung des Elektromotors bei der Betriebstemperatur entspricht, und wobei I_{ref} der erfassten elektrischen Betriebsstromstärke des Elektromotors bei der Betriebstemperatur entspricht, und dass
die Steuerung (119) insbesondere ausgebildet ist, während des Betriebs des Antriebs (109) die Betriebstemperatur des Elektromotors auf Basis der folgenden Formel zu bestimmen, Tₒₚ = T_{ref} + ([Rₒₚ/R_{ref} - 1] / α), wobei Tₒₚ der Betriebstemperatur des Elektromotors entspricht, wobei T_{ref} der Referenztemperatur des Elektromotors entspricht, wobei Rₒₚ dem bestimmten elektrischen Betriebswiderstand des Elektromotors entspricht, wobei R_{ref} dem bestimmten elektrischen Referenzwiderstand des Elektromotors entspricht, und wobei α einem materialabhängigen Temperaturkoeffizienten entspricht.

4. Haushaltsgerät (100) nach einem der vorangehenden Ansprüche, **dadurch gekennzeichnet, dass** die Steuerung (119) ein elektrisches Stromerfassungselement (119-1) umfasst, wobei das elektrische Stromerfassungselement (119-1) ausgebildet ist, bei der durch den Temperatursensor (123) erfassten Referenztemperatur die an dem Elektromotor anliegende elektrische Referenzspannung und elektrische Referenzstromstärke zu erfassen, und wobei das elektrische Stromerfassungselement (119-1) ausgebildet ist bei der Betriebstemperatur die an dem Elektromotor anliegende elektrische Betriebsspannung und elektrische Betriebsstromstärke zu erfassen.

5. Haushaltsgerät (100) nach einem der vorangehenden Ansprüche, **dadurch gekennzeichnet, dass** das Haushaltsgerät (100) ein Wäschepflegegerät (100-1) zum Pflegen von Wäsche ist, wobei das Wäschepflegegerät (100-1) eine Wäschetrommel (107) zum Aufnehmen von Wäsche umfasst, wobei der Antrieb (109) ein Trommelantrieb (109-1) zum Antreiben der Wäschetrommel (107) des Wäschepflegegeräts (100-1) ist, und wobei der Elektromotor des Trommelantriebs (109-1) ausgebildet ist, die Wäschetrommel (107) zu rotieren, und/oder dass
das Haushaltsgerät (100) ein Wäschepflegegerät (100-1) zum Pflegen von Wäsche ist, wobei das Wäschepflegegerät (100-1) einen Laugenbehälter (105) zum Aufnehmen von Waschflüssigkeit umfasst, wobei das Wäschepflegegerät (100-1) eine Pumpe (117) zum Umpumpen von Waschflüssigkeit in dem Laugenbehälter (105) und/oder zum Abpumpen von Waschflüssigkeit aus dem Laugenbehälter (105) umfasst, wobei der Antrieb (109) ein Pumpenantrieb (109-2) zum Antreiben der Pumpe (117) des Wäschepflegegeräts (100-1) ist, und wobei der Elektromotor des Pumpenantriebs (109-2) ausgebildet ist, die Pumpe (117) anzutreiben, um Waschflüssigkeit in dem Laugenbehälter (105) umzupumpen und/oder dass
das Haushaltsgerät (100) ein Wäschepflegegerät (100-1) zum Pflegen von Wäsche ist, wobei das Wäschepflegegerät (100-1) eine Lüftungseinheit mit einem rotierbaren Impeller zum Trocknen der in der Wäschetrommel (107) aufgenommenen Wäsche aufweist, wobei der Antrieb (109) ein Impellerantrieb zum Antreiben des Impellers ist, und wobei der Elektromotor des Impellerantriebs ausgebildet ist, den Impeller anzutreiben, um die Wäsche in der Wäschetrommel (107) zu trocknen.

6. Haushaltsgerät (100) nach einem der vorangehenden Ansprüche, **dadurch gekennzeichnet, dass** der Temperatursensor (123) des Haushaltsgeräts (100), insbesondere Wäschepflegegerät (100-1), ein von dem Elektromotor beabstandet in dem Haushaltsgeräts (100), insbesondere Wäschepflegegerät (100-1), angeordneter Temperatursensor (123) ist, wobei der Temperatursensor (123) insbesondere nicht direkt mit dem Elektromotor thermisch gekoppelt ist.

7. Haushaltsgerät (100) nach einem der vorangehenden Ansprüche, **dadurch gekennzeichnet, dass** in der Steuerung (119) ein Nominalwiderstandsbereich des Elektromotors hinterlegt ist, wobei der Nominalwiderstandsbereich des Elektromotors insbesondere durch den Hersteller des Elektromotors festgelegt ist, wobei der Nominalwiderstandsbereich insbesondere einen Nominalwiderstandswert und einen Toleranzbereich umfasst, um den Nominalwiderstandsbereich festzulegen, wobei die Steuerung (119) ausgebildet ist, den bestimmten elektrischen Referenzwiderstand des Elektromotors mit dem Nominalwiderstandsbereich des Elektromotors zu vergleichen, wobei die Steuerung (119) ausgebildet ist, während des Betriebs des Antriebs (109) die Betriebstemperatur des Elektromotors in Abhängigkeit von der an dem Elektromotor anliegenden elektrischen Betriebsspannung und elektrischen Betriebsstromstärke, sowie in Abhängigkeit des bestimmten Referenzwiderstands zu bestimmen, wenn der bestimmte elektrische Referenzwiderstand des Elektromotors innerhalb des Nominalwiderstandsbereichs des Elektromotors liegt.

8. Haushaltsgerät (100) nach Anspruch 7, **dadurch gekennzeichnet, dass** die Steuerung (119) ausgebildet, ist den Nominalwiderstand des Elektromotors als elektrischen Referenzwiderstand des Elektromotors festzulegen, wenn der bestimmte elektrische Referenzwiderstand des Elektromotors außerhalb des Nominalwiderstandsbereichs des Elektromotors liegt.

9. Haushaltsgerät (100) nach einem der vorangehenden Ansprüche, **dadurch gekennzeichnet, dass** der Elektromotor des Antriebs (109) einen Stator und einen Rotor aufweist, wobei der Stator und/oder Rotor jeweils zumindest eine elektrische Spule aufweist, und wobei die Steuerung (119) ausgebildet ist, bei der erfassten Referenztemperatur den elektrischen Referenzwiderstand der zumindest einen elektrischen Spule des Elektromotors in Abhängigkeit von einer an der zumindest einen elektrischen Spule des Elektromotor anliegenden elektrischen Referenzspannung und elektrischen Referenzstromstärke zu bestimmen, und dass die Steuerung (119) ausgebildet ist, während des Betriebs des Antriebs (109) die Betriebstemperatur der zumindest einen elektrischen Spule des Elektromotors in Abhängigkeit einer an der zumindest einen elektrischen Spule des Elektromotors anliegenden elektrischen Betriebsspannung und elektrischen Betriebsstromstärke, sowie in Abhängigkeit des bestimmten Referenzwiderstands und der Referenztemperatur zu bestimmen, wobei insbesondere der Rotor einen Permanentmagneten und der Stator die zumindest eine elektrische Spule umfasst.

10. Haushaltsgerät (100) nach einem der vorangehenden Ansprüche, **dadurch gekennzeichnet, dass** die Steuerung (119) ausgebildet ist, den Elektromotor des Antriebs (109) zu deaktivieren oder die Drehzahl und/oder Anschaltdauer des Elektromotors des Antriebs (109) zu reduzieren, wenn die bestimmte Betriebstemperatur des Elektromotors zumindest eine Zieltemperatur überschreitet.

11. Haushaltsgerät (100) nach Anspruch 10, **dadurch gekennzeichnet, dass** die Steuerung (119) ausgebildet ist, die Drehzahl und/oder Anschaltdauer des Elektromotors des Antriebs (109) zu reduzieren, wenn die bestimmte Betriebstemperatur des Elektromotors eine erste Zieltemperatur überschreitet, jedoch geringer als eine zweite Zieltemperatur ist, und/oder dass die Steuerung (119) ausgebildet ist, den Elektromotor des Antriebs (109) zu deaktivieren, wenn die bestimmte Betriebstemperatur des Elektromotors eine zweite Zieltemperatur überschreitet, wobei die zweite Zieltemperatur größer als die erste Zieltemperatur ist.

12. Haushaltsgerät (100) nach einem der vorangehenden Ansprüche, **dadurch gekennzeichnet, dass** der Elektromotor des Antriebs (109) einen bürstenlosen Gleichstrommotor (BLDC-Motor) oder einen Permanentmagnet-Synchronmotor (PMSM) umfasst.

13. Verfahren (200) zum Bestimmen einer Betriebstemperatur eines Antriebs (109) in einem Haushaltsgerät (100), wobei das Haushaltsgerät (100) den Antrieb (109) zum Antreiben eines beweglichen Elements (106) des Haushaltsgeräts (100), wobei der Antrieb (109) einen Elektromotor umfasst, welcher ausgebildet ist, das bewegliche Element (106) zu bewegen, und eine Steuerung (119), welche steuerungstechnisch mit dem Antrieb (109) verbunden ist, aufweist, und dass das Haushaltsgerät (100) einen Temperatursensor (123) zum Erfassen einer Temperatur aufweist, wobei die Steuerung (119) steuerungstechnisch mit dem Temperatursensor (123) verbunden ist,
**dadurch gekennzeichnet,**
**dass** die Steuerung (119) ausgebildet ist, den elektrischen Referenzwiderstand des Elektromotors bei der Aktivierung, insbesondere unmittelbar nach der Aktivierung, des Haushaltsgeräts (100) zu bestimmen, wobei das Verfahren (200) die folgenden Verfahrensschritte umfasst,
Bestimmen (201) eines elektrischen Referenzwiderstands des Elektromotors in Abhängigkeit von einer an dem Elektromotor anliegenden elektrischen Referenzspannung und elektrischen Referenzstromstärke bei einer durch den Temperatursensor (123) erfassten Referenztemperatur durch die Steuerung (119), und
Bestimmen (203) der Betriebstemperatur des Elektromotors während des Betriebs des Antriebs (109) in Abhängigkeit einer an dem Elektromotor anliegenden elektrischen Betriebsspannung und elektrischen Betriebsstromstärke, sowie in Abhängigkeit des bestimmten Referenzwiderstands und der Referenztemperatur durch die Steuerung (119),
wobei der elektrische Referenzwiderstand des Elektromotors bei der Aktivierung, insbesondere unmittelbar nach der Aktivierung, des Haushaltsgeräts (100) durch die Steuerung (119) bestimmt wird.

14. Verfahren (200) nach Anspruch 13, **dadurch gekennzeichnet, dass** das Verfahren (200) den weiteren Verfahrensschritt umfasst,
Deaktivieren (205-1) des Elektromotors des Antriebs (109) oder Reduzieren (205-2) der Drehzahl des Elektromotors des Antriebs (109) oder Reduzieren (205-3) der Anschaltdauer des Elektromotors des Antriebs (109), wenn die bestimmte Betriebstemperatur des Elektromotors zumindest eine Zieltemperatur überschreitet.

## Claims

1. Household appliance (100) with a drive (109) for driving a moveable element (106) of the household appliance (100), wherein the drive (109) comprises an electric motor, which is embodied to move the moveable element (106), a controller (119) which is connected to the drive (109) by way of control technology, and a temperature sensor (123) for capturing a temperature, wherein the controller (119) is connected to the temperature sensor (123) by way of control technology,
**characterised in that**
the controller (119) is embodied to determine an electric reference resistance of the electric motor as a function of an electric reference voltage applied to the electric motor and electric reference current intensity at a reference temperature captured by the temperature sensor (123), and
wherein, the controller (119) is embodied, during operation of the drive (109), to determine the operating temperature of the electric motor as a function of an electric operating voltage and electric operating current intensity applied to the electric motor and as a function of the specific reference resistance and the reference temperature,
wherein the controller (119) is embodied to determine the electric reference resistance of the electric motor upon activation, in particular immediately after activation, of the household appliance (100).

2. Household appliance (100) according to claim 1, **characterised in that** the controller (119) is embodied to determine the electric reference resistance of the electric motor on the basis of the following formula, R_{ref}= U_{ref}/ I_{ref}, wherein R_{ref} corresponds to the electric reference resistance of the electric motor at the reference temperature captured by the temperature sensor (123), wherein U_{ref} corresponds to the electric reference voltage of the electric motor at the reference temperature captured by the temperature sensor (123) and wherein I_{ref} corresponds to the captured electric reference current intensity of the electric motor at the reference temperature captured by the temperature sensor (123).

3. Household appliance (100) according to claim 2, **characterised in that** the controller (119) is embodied to determine an electric operating resistance of the electric motor on the basis of the following formula, Rₒₚ = Uₒₚ/Iₒₚ, wherein Rₒₚ corresponds to the electric operating resistance of the electric motor at the operating temperature, wherein Uₒₚ corresponds to the captured electric operating voltage of the electric motor at the operating temperature, and wherein I_{ref} corresponds to the captured electric operating current intensity of the electric motor at the operating temperature, and that
the controller (119) is in particular embodied, during operation of the drive (109), to determine the operating temperature of the electric motor on the basis of the following formula, Tₒₚ = T_{ref}+([Rₒₚ/R_{ref}- 1]/α), wherein Tₒₚ corresponds to the operating temperature of the electric motor, wherein T_{ref} corresponds to the reference temperature of the electric motor, wherein Rₒₚ corresponds to the specific electric operating resistance of the electric motor, wherein R_{ref} corresponds to the specific electric reference resistance of the electric motor and wherein α corresponds to a material-dependent temperature coefficient.

4. Household appliance (100) according to one of the preceding claims, **characterised in that** the controller (119) comprises an electric current capture element (119-1), wherein the electric current capture element (119-1) is embodied to capture the electric reference voltage applied to the electric motor and electric reference current intensity at the reference temperature captured by the temperature sensor (123), and wherein the electric current capture element (119-1) is embodied to capture the electric operating voltage applied to the electric motor and electric operating current intensity at the operating temperature.

5. Household appliance (100) according to one of the preceding claims, **characterised in that** the household appliance (100) is a laundry care appliance (100-1) for caring for laundry, wherein the laundry care appliance (100-1) comprises a laundry drum (107) for receiving laundry, wherein the drive (109) is a drum drive (109-1) for driving the laundry drum (107) of the laundry care appliance (100-1), and wherein the electric motor of the drum drive (109-1) is embodied to rotate the laundry drum (107), and/or that
the household appliance (100) is a laundry care appliance (100-1) for caring for laundry, wherein the laundry care appliance (100-1) comprises an outer tub (105) for receiving washing liquor, wherein the laundry care appliance (100-1) comprises a pump (117) for recirculating washing liquor in the outer tub (105) and/or for draining washing liquor out from the outer tub (105), wherein the drive (109) is a pump drive (109-2) for driving the pump (117) of the laundry care appliance (100-1), and wherein the electric motor of the pump drive (109-2) is embodied to drive the pump (117) in order to recirculate washing liquor in the outer tub (105), and/or that
the household appliance (100) is a laundry care appliance (100-1) for caring for laundry, wherein the laundry care appliance (100-1) has a ventilation unit with a rotatable impeller for drying the laundry received in the laundry drum (107), wherein the drive (109) is an impeller drive for driving the impeller, and wherein the electric motor of the impeller drive is embodied to drive the impeller in order to dry the laundry in the laundry drum (107).

6. Household appliance (100) according to one of the preceding claims, **characterised in that** the temperature sensor (123) of the household appliance (100), in particular laundry care appliance (100-1), is a temperature sensor (123) arranged at a distance from the electric motor in the household appliance (100), in particular laundry care appliance (100-1), wherein the temperature sensor (123) is in particular not directly thermally coupled to the electric motor.

7. Household appliance (100) according to one of the preceding claims, **characterised in that** a nominal resistance range of the electric motor is stored in the controller (119), wherein the nominal resistance range of the electric motor is defined in particular by the manufacturer of the electric motor, wherein the nominal resistance range comprises in particular a nominal resistance value and a tolerance range in order to define the nominal resistance range, wherein the controller (119) is embodied to compare the specific electric reference resistance of the electric motor with the nominal resistance range of the electric motor, wherein the controller (119) is embodied, during operation of the drive (109), to determine the operating temperature of the electric motor as a function of the electric operating voltage applied to the electric motor and electric operating current intensity, and as a function of the specific reference resistance, when the specific electric resistance of the electric motor lies within the nominal resistance range of the electric motor.

8. Household appliance (100) according to claim 7, **characterised in that** the controller (119) is embodied to define the nominal resistance of the electric motor as an electric reference resistance of the electric motor when the specific electric reference resistance of the electric motor lies outside of the nominal resistance range of the electric motor.

9. Household appliance (100) according to one of the preceding claims, **characterised in that** the electric motor of the drive (109) has a stator and a rotor, wherein the stator and/or rotor in each case have at least one electric coil, and wherein the controller (119) is embodied to determine the electric reference resistance of the at least one electric coil of the electric motor as a function of an electric reference voltage applied to the at least one electric coil of the electric motor and electric reference current intensity at the captured reference temperature, and that the controller (119) is embodied, during operation of the drive (109), to determine the operating temperature of the at least one electric coil of the electric motor as a function of an electric operating voltage applied to the at least one electric coil of the electric motor and electric operating current intensity, and as a function of the specific reference resistance and the reference temperature, wherein in particular the rotor comprises a permanent magnet and the stator comprises the at least one electric coil.

10. Household appliance (100) according to one of the preceding claims, **characterised in that** the controller (119) is embodied to deactivate the electric motor of the drive (109) or to reduce the speed and/or power-on duration of the electric motor of the drive (109) when the specific operating temperature of the electric motor exceeds at least one target temperature.

11. Household appliance (100) according to claim 10, **characterised in that** the controller (119) is embodied to reduce the speed and/or power-on duration of the electric motor of the drive (109) when the specific operating temperature of the electric motor exceeds a first target temperature, but is lower than a second target temperature, and/or that the controller (119) is embodied to deactivate the electric motor of the drive (109) when the specific operating temperature of the electric motor exceeds a second target temperature, wherein the second target temperature is greater than the first target temperature.

12. Household appliance (100) according to one of the preceding claims, **characterised in that** the electric motor of the drive (109) comprises a brushless direct current motor (BLDC motor) or a permanent magnet synchronous motor (PMSM).

13. Method (200) for determining an operating temperature of a drive (109) in a household appliance (100), wherein the household appliance (100) has the drive (109) for driving a movable element (106) of the household appliance (100), wherein the drive (109) comprises an electric motor, which is embodied to move the moveable element (106), and a controller (119) which is connected to the drive (109) by way of control technology, and that the household appliance (100) has a temperature sensor (123) for capturing a temperature, wherein the controller (119) is connected to the temperature sensor (123) by way of control technology,
**characterised in that**
the controller (119) is embodied to determine the electric reference resistance of the electric motor upon activation, in particular immediately after activation, of the household appliance (100), wherein the method (200) comprises the following method steps,
determining (201), by means of the controller (119), an electric reference resistance of the electric motor as a function of an electric reference voltage applied to the electric motor and electric reference current intensity at a reference temperature captured by the temperature sensor (123), and
determining (203), by means of the controller (119), the operating temperature of the electric motor during operation of the drive (109) as a function of an electric operating voltage applied to the electric motor and electric operating current intensity, and as a function of the specific reference resistance and the reference temperature,
wherein the electric reference resistance of the electric motor is determined upon activation, in particular immediately after activation, of the household appliance (100) by means of the controller (119).

14. Method (200) according to claim 13, **characterised in that** the method (200) comprises the further method step,
deactivating (205-1) the electric motor of the drive (109) or reducing (205-2) the speed of the electric motor of the drive (109) or reducing (205-3) the power-on duration of the electric motor of the drive (109) when the specific operating temperature of the electric motor exceeds at least one target temperature.

## Revendications

1. Appareil ménager (100) avec un entraînement (109) pour l'entraînement d'un élément mobile (106) de l'appareil ménager (100), dans lequel l'entraînement (109) comprend un moteur électrique qui est formé pour déplacer l'élément mobile (106), une commande (119) reliée sur le plan de la technique de commande à l'entraînement (109), et un capteur de température (123) pour la détection d'une température, dans lequel
la commande (119) est reliée sur le plan de la technique de commande au capteur de température (123), **caractérisé en ce que** la commande (119) est formée pour déterminer, en présence d'une température de référence détectée par le capteur de température (123), une résistance électrique de référence du moteur électrique en fonction d'une tension électrique de référence et d'une intensité électrique de référence appliquées au moteur électrique, et dans lequel la commande (119) est formée pour déterminer, pendant le fonctionnement de l'entraînement (109), la température de fonctionnement du moteur électrique en fonction d'une tension électrique de fonctionnement et d'une intensité de courant électrique de fonctionnement appliquées au moteur électrique, ainsi qu'en fonction de la résistance de référence déterminée et de la température de référence,
dans lequel la commande (119) est formée pour déterminer la résistance électrique de référence du moteur électrique lors de l'activation, en particulier immédiatement après l'activation, de l'appareil ménager (100).

2. Appareil ménager (100) selon la revendication 1, **caractérisé en ce que** la commande (119) est formée pour déterminer la résistance électrique de référence du moteur électrique sur la base de la formule suivante, R_{ref} = U_{ref}/I_{ref},, dans lequel R_{ref} correspond à la résistance électrique de référence du moteur électrique à la température de référence détectée par le capteur de température (123), dans lequel U_{ref} correspond à la tension électrique de référence du moteur électrique à la température de référence détectée par le capteur de température (123), et dans lequel I_{ref} correspond à l'intensité électrique de référence du moteur électrique détectée à la température de référence détectée par le capteur de température (123).

3. Appareil ménager (100) selon la revendication 2, **caractérisé en ce que** la commande (119) est formée pour déterminer une résistance électrique de fonctionnement du moteur électrique sur la base de la formule suivante, Rₒₚ = Uₒₚ/Iₒₚ, dans lequel Rₒₚ correspond à la résistance électrique de fonctionnement du moteur électrique à la température de fonctionnement, dans lequel Uₒₚ correspond à la tension électrique de fonctionnement détectée du moteur électrique à la température de fonctionnement, et dans lequel I_{ref} correspond à l'intensité de courant électrique de fonctionnement du moteur électrique détectée à la température de fonctionnement, et **en ce que**
la commande (119) est en particulier formée pour déterminer, pendant le fonctionnement de l'entraînement (109), la température de fonctionnement du moteur électrique sur la base de la formule suivante, Tₒₚ = T_{ref} + ([Rₒₚ/R_{ref} - 1] / α), dans lequel Tₒₚ correspond à la température de fonctionnement du moteur électrique, dans lequel T_{ref} correspond à la température de référence du moteur électrique, dans lequel Rₒₚ correspond à la résistance de fonctionnement électrique déterminée du moteur électrique, dans lequel R_{ref} correspond à la résistance électrique de référence déterminée du moteur électrique, et dans lequel α correspond à un coefficient de température dépendant du matériau.

4. Appareil ménager (100) selon l'une des revendications précédentes, **caractérisé en ce que** la commande (119) comprend un élément de détection de courant électrique (119-1), dans lequel l'élément de détection de courant électrique (119-1) est formé pour détecter la tension électrique de référence et l'intensité électrique de référence appliquées au moteur électrique à la température de référence détectée par le capteur de température (123), et dans lequel l'élément de détection de courant électrique (119-1) est formé pour détecter la tension électrique de fonctionnement et l'intensité de courant électrique de fonctionnement appliquées au moteur électrique à la température de fonctionnement.

5. Appareil ménager (100) selon l'une des revendications précédentes, **caractérisé en ce que** l'appareil ménager (100) est un appareil d'entretien du linge (100-1) pour l'entretien du linge, dans lequel l'appareil d'entretien du linge (100-1) comprend un tambour à linge (107) pour l'accueil de linge, dans lequel l'entraînement (109) est un entraînement de tambour (109-1) pour l'entraînement du tambour à linge (107) de l'appareil d'entretien du linge (100-1), et dans lequel le moteur électrique de l'entraînement de tambour (109-1) est formé pour faire tourner le tambour à linge (107), et/ou **en ce que**
l'appareil ménager (100) est un appareil d'entretien du linge (100-1) pour l'entretien du linge, dans lequel l'appareil d'entretien du linge (100-1) comprend une cuve de lavage (105) pour l'accueil de liquide de lavage, dans lequel l'appareil d'entretien du linge (100-1) comprend une pompe (117) pour le transvasement de liquide de lavage dans la cuve de lavage (105) et/ou pour le pompage du liquide de lavage en dehors de la cuve de lavage (105), dans lequel l'entraînement (109) est un entraînement de pompe (109-2) pour l'entraînement de la pompe (117) de l'appareil d'entretien du linge (100-1), et dans lequel le moteur électrique de l'entraînement de pompe (109-2) est formé pour entraîner la pompe (117) afin de transvaser le liquide de lavage dans la cuve de lavage (105) et/ou **en ce que**
l'appareil ménager (100) est un appareil d'entretien du linge (100-1) pour l'entretien du linge, dans lequel l'appareil d'entretien du linge (100-1) présente une unité de ventilation avec un impulseur rotatif pour le séchage du linge accueilli dans le tambour à linge (107), dans lequel l'entraînement (109) est un entraînement d'impulseur pour l'entraînement de l'impulseur, et dans lequel le moteur électrique de l'entraînement d'impulseur est formé pour entraîner l'impulseur afin de sécher le linge dans le tambour à linge (107).

6. Appareil ménager (100) selon l'une des revendications précédentes, **caractérisé en ce que** le capteur de température (123) de l'appareil ménager (100), en particulier de l'appareil d'entretien du linge (100-1), est un capteur de température (123) disposé à distance du moteur électrique dans l'appareil ménager (100), en particulier dans l'appareil d'entretien du linge (100-1), dans lequel le capteur de température (123) n'est en particulier pas directement couplé thermiquement au moteur électrique.

7. Appareil ménager (100) selon l'une des revendications précédentes, **caractérisé en ce qu'**une plage de résistance nominale du moteur électrique est enregistrée dans la commande (119), dans lequel la plage de résistance nominale du moteur électrique est en particulier établie par le fabricant du moteur électrique, dans lequel la plage de résistance nominale comprend en particulier une valeur de résistance nominale et une plage de tolérance, pour établir la plage de résistance nominale, dans lequel la commande (119) est formée pour comparer la résistance électrique de référence déterminée du moteur électrique à la plage de résistance nominale du moteur électrique, dans lequel la commande (119) est formée pour déterminer, pendant le fonctionnement de l'entraînement (109), la température de fonctionnement du moteur électrique en fonction de la tension électrique de fonctionnement et de l'intensité de courant électrique de fonctionnement appliquées au moteur électrique, ainsi qu'en fonction de la résistance de référence déterminée, lorsque la résistance électrique de référence du moteur électrique déterminée se situe dans la plage de résistance nominale du moteur électrique.

8. Appareil ménager (100) selon la revendication 7, **caractérisé en ce que** la commande (119) est formée pour établir la résistance nominale du moteur électrique comme résistance électrique de référence du moteur électrique lorsque la résistance électrique de référence du moteur électrique déterminée se situe en dehors de la plage de résistance nominale du moteur électrique.

9. Appareil ménager (100) selon l'une des revendications précédentes, **caractérisé en ce que** le moteur électrique de l'entraînement (109) présente un stator et un rotor, dans lequel le stator et/ou le rotor présentent respectivement au moins une bobine électrique, et dans lequel la commande (119) est formée pour déterminer, en présence de la température de référence détectée, la résistance électrique de référence de l'au moins une bobine électrique du moteur électrique en fonction d'une tension électrique de référence et d'une intensité électrique de référence appliquées à l'au moins une bobine électrique du moteur électrique, et **en ce que** la commande (119) est formée pour déterminer, pendant le fonctionnement de l'entraînement (109), la température de fonctionnement de l'au moins une bobine électrique du moteur électrique en fonction d'une tension électrique de fonctionnement et d'une intensité de courant électrique de fonctionnement appliquées à l'au moins une bobine électrique du moteur électrique, ainsi qu'en fonction de la résistance de référence déterminée et de la température de référence, dans lequel le rotor comprend en particulier un aimant permanent et le stator l'au moins une bobine électrique.

10. Appareil ménager (100) selon l'une des revendications précédentes, **caractérisé en ce que** la commande (119) est formée pour désactiver le moteur électrique de l'entraînement (109) ou pour réduire la vitesse de rotation et/ou la durée de fonctionnement du moteur électrique de l'entraînement (109) lorsque la température de fonctionnement du moteur électrique déterminée excède au moins une température cible.

11. Appareil ménager (100) selon la revendication 10, **caractérisé en ce que** la commande (119) est formée pour réduire la vitesse de rotation et/ou la durée de fonctionnement du moteur électrique de l'entraînement (109) lorsque la température de fonctionnement du moteur électrique déterminée excède une première température cible mais est inférieure à une deuxième température cible, et/ou **en ce que** la commande (119) est formée pour désactiver le moteur électrique de l'entraînement (109) lorsque la température de fonctionnement du moteur électrique déterminée excède une deuxième température cible, dans lequel la deuxième température cible est supérieure à la première température cible.

12. Appareil ménager (100) selon l'une des revendications précédentes, **caractérisé en ce que** le moteur électrique de l'entraînement (109) comprend un moteur à courant continu sans balais (moteur BLDC) ou un moteur synchrone à aimant permanent (PMSM).

13. Procédé (200) pour la détermination d'une température de fonctionnement d'un entraînement (109) dans un appareil ménager (100), dans lequel l'appareil ménager (100) comprend l'entraînement (109) pour l'entraînement d'un élément mobile (106) de l'appareil ménager (100), dans lequel l'entraînement (109) comprend un moteur électrique formé pour déplacer l'élément mobile (106) et présente une commande (119) reliée sur le plan de la technique de commande à l'entraînement (109), et en ce que l'appareil ménager (100) présente un capteur de température (123) pour la détection d'une température, dans lequel la commande (119) est reliée sur le plan technique de commande au capteur de température (123),
**caractérisé en ce que**
la commande (119) est formée pour déterminer la résistance électrique de référence du moteur électrique lors de l'activation, en particulier immédiatement après l'activation, de l'appareil ménager (100), dans lequel le procédé (200) comprend les étapes suivantes :
détermination (201) par la commande (119) d'une résistance électrique de référence du moteur électrique en fonction d'une tension électrique de référence et d'une intensité de courant électrique de référence appliquées au moteur électrique en présence d'une température de référence détectée par le capteur de température (123), et
détermination (203) par la commande (119) de la température de fonctionnement du moteur électrique pendant le fonctionnement de l'entraînement (109) en fonction d'une tension de fonctionnement électrique et d'une intensité de courant électrique de fonctionnement appliquées au moteur électrique, ainsi qu'en fonction de la résistance de référence déterminée et de la température de référence,
dans lequel la résistance électrique de référence du moteur électrique est déterminée par la commande (119) lors de l'activation, en particulier immédiatement après l'activation, de l'appareil ménager (100).

14. Procédé (200) selon la revendication 13, **caractérisé en ce que** le procédé (200) comprend l'étape de procédé supplémentaire :
désactivation (205-1) du moteur électrique de l'entraînement (109) ou réduction (205-2) de la vitesse de rotation du moteur électrique de l'entraînement (109) ou réduction (205-3) de la durée de fonctionnement du moteur électrique de l'entraînement (109) lorsque la température de fonctionnement du moteur électrique déterminée excède au moins une température cible.
